# EUROPEAN PATENT APPLICATION

(11) **EP 1 969 925 A1**
(43) Date of publication of application: **17.09.2008**
(21) Application number: 07380246.4
(22) Date of filing: 06.09.2007
(51) Int. Cl.: A01K 61/00

(54) **Submersible bottom cage for fish farming uses**

(30) Priority: 08.09.2006 ES 200602302
(71) Applicant: Aquafarm 2005, S.L., 36416 Mos - Pontevedra (ES)
(72) Inventor: The designation of the inventor has not yet been filed
(74) Representative: Carvajal y Urquijo, Isabel

(57) **Abstract**

The invention relates to a submersible bottom cage for fish farming uses, characterized in that it forms a submersible closed structure inside of which aquatic species (7) are bred. It has an approximately general bi-conical shape with one or several hollow central columns (1) arranged on the main axis and provided with at least one workable air tank for controlling the ability to be submersed/surfaced, said column or columns being joined to a circumferential structure or to a structure with another geometric shape (2, 3) by means of upper and lower bands or arms (4), the entire assembly being closed by means of a segmented or continuous closure net (5) going from the circumferential structure (2, 3) to the upper and lower ends of the central column (1), said column or columns (1) being inserted and coupled into another column or other columns (12) cast in a concrete block (11) deposited in the cage anchoring site such that the need for counterweights, hawsers or other anchoring and mooring elements is prevented.

## Description

### Object of the Invention

As expressed in the title of this specification, the present invention relates to a submersible bottom cage for fish farming uses, the essential purpose of which is to provide a bottom cage with controllable floatability which determines a large enclosure primarily for fish, mollusk and crustacean breeding, and another objective of the invention being that its ability to be submerged and to surface can be controlled such that interactions with the wind and waves are prevented and the visual environmental impact is eliminated. Another important purpose of the present invention consists of the fact that in order to anchor the cage, it is not necessary to use chains, anchors, hawsers, counterweights or other mooring accessories, which is aided by the invention because the elements determining the immobilization of the cage are a part thereof, this feature making the cage of the invention unique in its class because existing cages need the mentioned mooring elements.

### Background of the Invention

Different cages for fish farming are known which form submersible closed structures inside of which different species are bred and fattened. Conventional cages for fish farming have drawbacks relating to the fact that their ability to be submersed is not stable, requiring different mooring and anchoring elements which do not provide the desired stability.

Furthermore, due to the need for the mentioned mooring and anchoring elements, a large surface is required to install a polygon with a plurality of cages because the cages cannot be installed close to one another, a large gap between them being required due to the mentioned mooring and anchoring elements.

Another drawback of existing submersible cages is that the corresponding feed is not uniformly distributed throughout the entire cage because it is done by pumping it from the surface to a specific point in the cage.

### Description of the Invention

To meet the objectives and to prevent the drawbacks indicated in the preceding sections, the invention consists of a submersible bottom cage for fish farming uses forming a submersible closed structure inside of which aquatic species are bred.

According to the invention, the novel cage thereof has an approximately general bi-conical shape with one or several hollow central columns arranged on the main axis and provided with at least one workable air tank for controlling the ability to be submersed/surfaced, said column or columns being joined to a circumferential structure or to a structure with another geometric shape by means of upper and lower bands or arms, the entire assembly being closed by means of a segmented or continuous closure net going from the circumferential structure to the upper and lower ends of the central column, said column or columns being inserted and coupled into another column or other columns cast in a concrete block deposited in the cage anchoring site such that the need for counterweights, hawsers or other anchoring or mooring elements is prevented.

A horizontal base for the placement of fish can originate from the mentioned structure towards the inside of the cage.

In addition, the mentioned central column and/or structure can have means of connecting to biotopes, breeding establishments for different species and the like which allow compatible mixed farming.

The aforementioned structure can be formed by three toroidal rings with different circumferential segments joined to one another by means of approximately semicircular links or clamps.

In addition, the mentioned workable tank can have an air conduit with an electrovalve which allows remotely or directly controlling the degree of immersion or floatability of the cage.

The mentioned remote floatability control can be aided by a system reporting on the conditions of the environment surrounding the cage, such as waves, water currents, wind direction and intensity and/or others.

The cage of the invention can include means for a controlled feeding by computer or manually by means of a pipe connected to a feed spreader provided in the cage from a boat or from an on-shore fixed based.

The mentioned feed spreader can consist of an element similar to a funnel placed upside down in the upper area of the cage, such that a flexible pipe through which the feed is pumped is connected to the narrow part of the funnel. Therefore when the feed runs into an obstacle, it searches for an outlet through the inner walls of the funnel such that said feed is regularly spread throughout the entire upper part of the cage rather than being limited to one specific point, as occurs in conventional feed systems.

The cage of the invention can have stacking means for placing one cage on top of another such that the mentioned column or columns cast in the concrete block are long enough so that as many cages that have been foreseen can be inserted.

The cage of the invention can have a monitoring system by means of a television camera which allows controlling the condition of the aquatic species and/or any problem which may arise inside the cage.

The mentioned segmented closure net can be formed by several net panels, with as many links for joining the circumferential segments of the three rings, said links incorporating two vertical grooves in each of their larger surfaces such that the net panel fits in any of them, so that when replacing the net it is enough to remove a dirty net panel for its cleaning and introduce a clean net panel in the corresponding "free groove". It therefore has the advantage that it is not necessary to change the entire net of the cage for its cleaning, but rather just changing those panels that need to be cleaned, whereby requiring less personnel and less investment in replacement nets, the changes further being carried out without needing to move the cages, which prevents the fish from suffering stress when a conventional net is changed.

In addition, the mentioned closure net can be formed by two nets, an upper net and a lower net, both moored to one of the pipes of the circumferential ring, a zipper being placed in a part of the upper net so as to allow divers access to the cage.

When several cages are vertically stacked, as previously indicated, the mentioned means for feeding can consist of respective pipes connected to a distributor controlled from the mentioned boat or fixed base.

With the structure that has been described, the invention has advantages such as the fact that the concrete block with cast columns in which the cage is inserted is the only mooring and anchoring element, having enough weight that it prevents the movement the cage may have as a result of sea currents, providing the cage with great stability and aiding in both the application of several cages vertically in the mentioned columns integral with the concrete block, and in the horizontal distribution of a plurality of cages that can be very close to one another as no mooring hawsers are required, the surface for installing a polygon with a plurality of cages whereby being greatly reduced with regard to conventional systems.

Another advantage of the invention consists of the fact that the workable air tank existing in the cage allows its immersion or surfacing in a controlled manner and at the desired time. The stability on the bottom where it is located, which is aided by means of the invention, is novel and advantageous, allowing the prevention of drawbacks relating to waves, winds or other factors. The environmental visual impact further disappears in the location of the cage, since it can remain the entire time desired, on the corresponding bottom where it is located. The deterioration of the seabed is also controlled because since the cage is located on said bottom, the dispersion of organic residue is insignificant and is concentrated around the cage, being very easily cleaned. Another advantage consists of the fact that the stress the fish are subjected to is minimized due to the fact that the movements transmitted by the sea to conventional cages no longer occur by means of the cage of the invention. The fatigue and damage of the structure of the cage due to the actions of the sea are further minimized because it has been foreseen that the cage is completely immobile on the corresponding bottom.

To aid in better understanding this specification and as an integral part thereof, a set of drawings are attached below in which the object of the invention has been shown with an illustrative and non-limiting character.

### Brief Description of the Drawings

Figure 1 shows a perspective view of a submersible bottom cage for fish farming uses, carried out according to the present invention.
Figure 2 shows a schematic plan view of a cage similar to the one of the previous Figure 1 but additional breeding establishments which allow mixed farming having been incorporated.
Figure 3 shows a schematic profile view similar to the cage of the previous Figure 2, a concrete fixing block and column having been incorporated with dashed lines.
Figure 4 schematically shows a detail of the cage of the previous Figure 1, showing the incorporation in the cage of feed supply means.

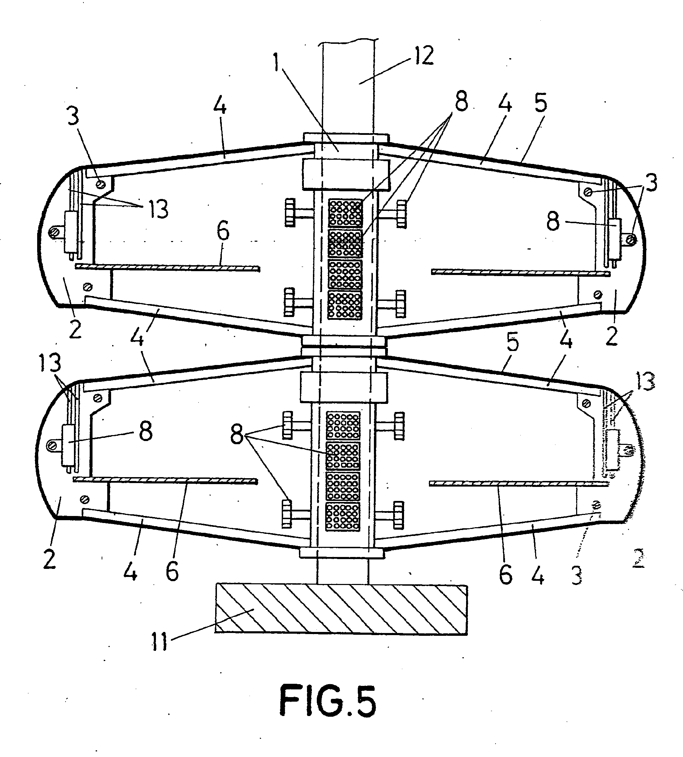

Figure 5 shows a view similar to the one of the previous Figure 3, but two cages stacked on the concrete block fixing column being included.

### Description of an Embodiment of the Invention

A description of an embodiment of the invention will be given below in reference to the numbers adopted in the figures.

In that sense, the submersible bottom cage for fish farming uses of this embodiment of the invention has a central column 1 provided with a workable air tank which allows controlling the ability of the cage to submerse and surface.

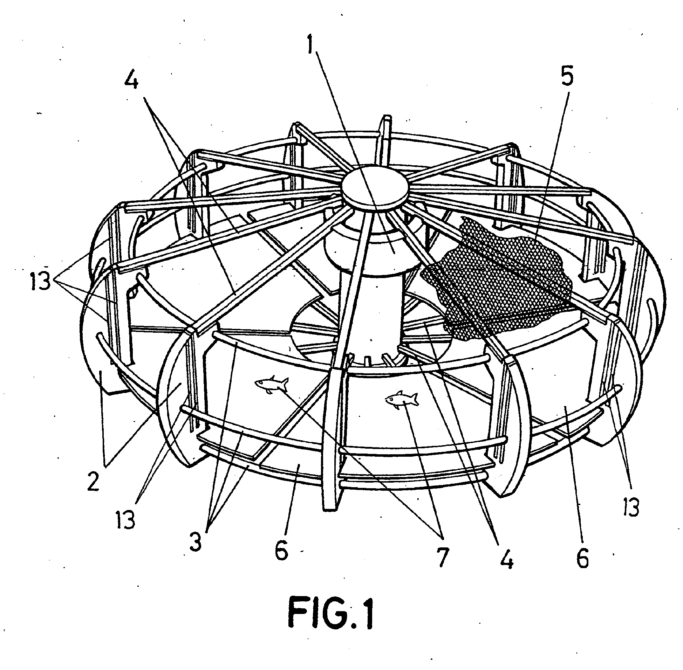

The central column 1 is joined to a circumferential structure which is formed by three toroidal rings 3 with different circumferential segments joined together by means of approximately semicircular links or clamps 2, the joining between said structure 2, 3 and the column 1 being determined by means of bands or arms 4 arranged in the upper and lower area of the cage, as can be seen in Figure 1.

The described assembly is closed by means of a net 5 which can be segmented or continuous, and which goes from the circumferential structure 2, 3 to the upper and lower ends of the central column 1.

The central column 1 can be inserted and coupled in a column 12 integral with a concrete block 11 which is deposited in the cage anchoring site, such that the need for counterweights, hawsers or other anchoring and mooring elements is prevented.

A horizontal base 6 for the placement of fish or other aquatic species 7 originates from the circumferential structure 2, 3 towards the inside of the cage.

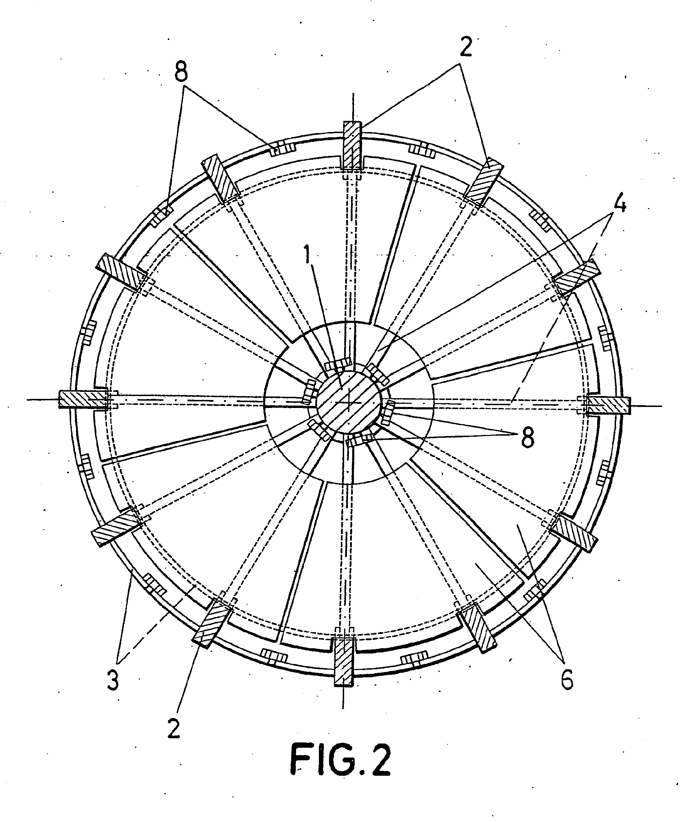

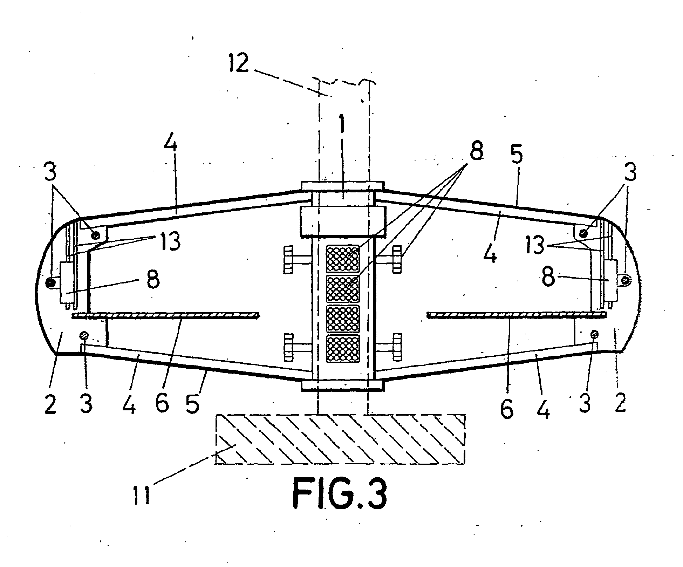

As shown in Figures 2 and 3, further both the central column 1 and the circumferential structure 2, 3 can further be connected to biotopes, breeding establishments for different species and the like 8 to carry out compatible mixed farming.

The workable tank of the central column 1 has an air conduit with an electrovalve which allows remotely controlling the degree of immersion or floatability of the cage.

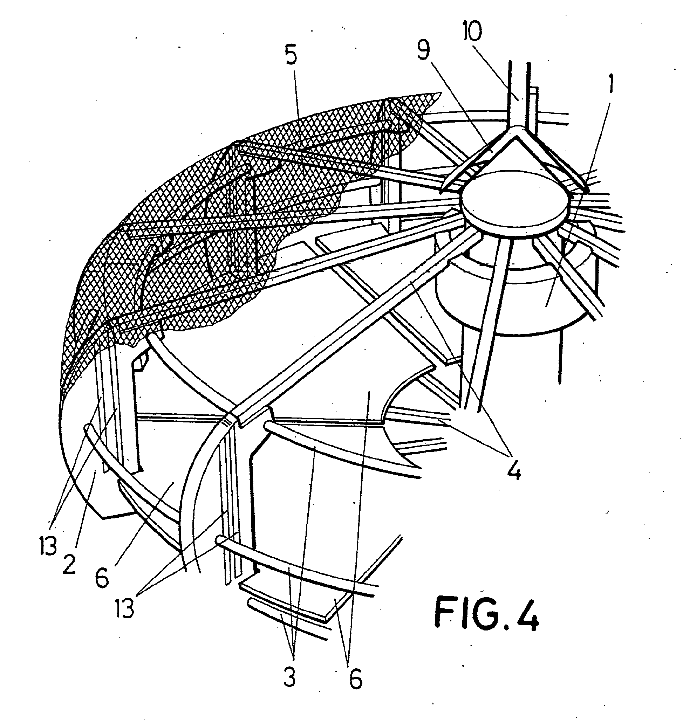

The cage of this embodiment further includes means for a controlled feeding by a computer by means of a pipe 10 connected to a feed spreader 9 from a boat or from an on-shore fixed base. As seen in Figure 4, said feed spreader 9 consists of an element similar to a funnel placed upside down in the upper area of the cage, such that a flexible pipe 10 through which the feed is pumped is connected to the narrow part of the funnel. Therefore, the feed runs into an obstacle in the outlet and tries to go towards the inner walls of the funnel, determining that its distribution and spreading inside the cage is much more even and uniform that if it was applied directly with the pipe to one specific point.

The cage of this embodiment allows its vertical application by means of inserting several consecutive cages in the mentioned column integral with a concrete block, in which case the means for feeding 9 and 10 which required the upper area of the cage are replaced with other means that do not require being applied in that area and can consist of respective pipes connected to a distributor controlled from the aforementioned boat or fixed base.

According to different embodiments, it has been provided that the closure net 5 is continuous or segmented. Therefore, in one of said embodiments, the net 5 is formed by several net panels, with as many links 2 for joining the circumferential segments of the three rings 3. In this case, the links 2 incorporate two vertical grooves 13 in each of their larger surfaces, such that the corresponding net panel fits into any of said grooves. Therefore, when replacing the net it is enough to remove a dirty net panel for its cleaning and introduce a clean net panel in the corresponding free groove. According to other embodiments, the net 5 is formed by two nets, an upper net and a lower net, both moored to one of the pipes of the three circumferential rings 3, a zipper being placed in a part of the upper net allowing divers access to the cage.

## Claims

1. A submersible bottom cage for fish farming uses, forming a submersible closed structure inside of which aquatic species (7) are bred, **characterized in that** it has an approximately general bi-conical shape with one or several hollow central columns (1) arranged on the main axis and provided with at least one workable air tank for controlling the ability to be submersed/surfaced, said column or columns being joined to a circumferential structure or to a structure with another geometric shape (2, 3) by means of upper and lower bands or arms (4), the entire assembly being closed by means of a segmented or continuous closure net (5) going from the circumferential structure (2, 3) to the upper and lower ends of the central column (1), said column or columns (1) being inserted and coupled into another column or other columns (12) cast in a concrete block (11) deposited in the cage anchoring site such that the need for counterweights, hawsers or other anchoring and mooring elements is prevented.

2. A submersible bottom cage for fish farming uses according to claim 1, **characterized in that** a horizontal base (6) for the placement of fish or other aquatic species (7) originates from the mentioned structure towards the inside of the cage.

3. A submersible bottom cage for fish farming uses according to claim 1, **characterized in that** said central column and/or structure has means of connecting to biotopes, breeding establishments for different species and the like (8) which allow compatible mixed farming.

4. A submersible bottom cage for fish farming uses according to claim 1, **characterized in that** said structure is formed by three toroidal rings (3) with several circumferential segments joined to one another by means of approximately semicircular links or clamps (2).

5. A submersible bottom cage for fish farming uses according to, **characterized in that** said workable tank has an air conduit with an electrovalve which allows remotely or directly controlling the degree of immersion or floatability of the cage.

6. A submersible bottom cage for fish farming uses according to claim 5, **characterized in that** said remote floatability control is aided by a system reporting on the conditions of the environment surrounding the cage, such as waves, water currents, wind direction and intensity and/or others.

7. A submersible bottom cage for fish farming uses according to claim 1, **characterized in that** it includes means for a controlled feeding by computer or manually by means of a pipe (10) connected to a feed spreader (9) provided in the cage from a boat or from an on-shore fixed based.

8. A submersible bottom cage for fish farming uses according to claim 7, **characterized in that** said feed spreader (9) consists of an element similar to a funnel placed upside down in the upper area of the cage, such that a flexible pipe (10) through which the feed is pumped is connected to the narrow part of the funnel.

9. A submersible bottom cage for fish farming uses according to claim 1, **characterized in that** it has stacking means for placing one cage on top of another such that the mentioned column or columns cast in the concrete block are long enough so that as many cages that have been foreseen can be inserted.

10. A submersible bottom cage for fish farming uses according to claim 1, **characterized in that** it has a monitoring system by means of a television camera which allows controlling the condition of the aquatic species (7) and/or any problem which may arise inside the cage.

11. A submersible bottom cage for fish farming uses according to claim 1, **characterized in that** said closure net (5) is a segmented closure net formed by several net panels, with as many links (2) for joining the circumferential segments of the three rings (3), said links (2) incorporating two vertical grooves (13) in each of their larger surfaces such that the corresponding net panel fits in any of them, so that when replacing the net it is enough to remove a dirty net panel for its cleaning and introduce a clean net panel in the corresponding "free groove".

12. A submersible bottom cage for fish farming uses according to claim 1, **characterized in that** said closure net (5) is a net formed by two nets, an upper net and a lower net, both moored to one of the pipes of the three circumferential rings (3), a zipper being placed in a part of the upper net so as to allow divers access to the cage.

13. A submersible bottom cage for fish farming uses according to claims 7 and 9, **characterized in that** by arranging several stacked cages, the mentioned means for feeding consist of respective pipes connected to a distributor controlled from said boat or fixed base.
